# EUROPÄISCHE PATENTSCHRIFT

(11) **EP 0 609 748 B1**
(45) Veröffentlichungstag und Bekanntmachung des Hinweises auf die Patenterteilung: **04.06.1997**
(21) Anmeldenummer: 94101006.8
(22) Anmeldetag: 25.01.1994
(51) Int. Cl.: F16H 25/12, B21C 1/30, F16H 53/02

(54) **Bewegungsantrieb zur translatorischen Bewegung von Bauteilen**
Motion drive for translational movement of components
Ensemble d'entraînement à mouvement en translation pour un élément de construction

(30) Priorität: 02.02.1993 DE 4302788
(43) Veröffentlichungstag der Anmeldung: 10.08.1994
(73) Patentinhaber: Schumag Aktiengesellschaft, D-52076 Aachen (DE)
(72) Erfinder: Walczak, Bruno, D-52080 Aachen (DE); Mostert, Johann, B-4700 Eupen (BE)
(74) Vertreter: Castell, Klaus, Dr.-Ing.

(56) Entgegenhaltungen:
- EP-A- 0 371 165
- DE-A- 1 936 139
- DE-A- 3 731 786
- GB-A- 1 134 066
- PATENT ABSTRACTS OF JAPAN vol. 4, no. 57 (M-9) (539) 26. April 1980 & JP-A-55 024 263 (TOKYO SHIBAURA)

## Beschreibung

Die Erfindung betrifft einen Bewegungsantrieb, mit den Merkmalen des Oberbegriffs des Patentanspruchs 1.

Ein derartiger gattungsgem. Bewegungsantrieb ist aus der DE-A-19 36 139 bekannt. Bei diesem Bewegungsantrieb ist zur Erhöhung der Federkraft lediglich im Bereich der Kurvenumkehrpunkte eine Stegverbreiterung des Kurventrägers in Richtung der den Arbeitsrollen des Ziehschlittens abgekehrten Seite vorgesehen. Durch diese Verbreiterung wird zwar die Federkraft erhöht, die Praxis hat jedoch gezeigt, daß trotzdem beim Passieren des oberen Umkehrpunktes immer wieder Schläge auftreten.

Der Erfindung liegt daher die Aufgabe zugrunde, einen Bewegungsantrieb vorzuschlagen, der so gestaltet ist, daß beim Passieren der Umkehrpunkte keine Schläge auftreten.

Diese Aufgabe wird mit den Merkmalen des Oberbegriffs in Verbindung mit den Merkmalen des kennzeichnenden Teils des Anspruchs 1 gelöst.

Hierdurch wird sichergestellt, daß mindestens im Umkehrpunkt selbst, in welchem die Bewegungsrichtung von der Ziehrichtung in die Rückhubrichtung umgekehrt wird, die notwendige Kraft für die erforderliche Beschleunigung oder Verzögerung erreicht ist. Hierbei ist auch zu beachten, daß eine solche Verdickung des Querschnitts der Kurve zur Abstandsvergrößerung der genannten Bauelemente nur im Bereich des oberen Totpunktes, im welchem die Umkehrung vom Ziehhub in den Rückhub eingeleitet wird, erforderlich ist, wenn das die Ziehkraft übertragende Bauelement starr angeordnet ist. Im unteren Umkehrpunkt ist in einem solchen Fall eine Verdickung der Kurve nicht erforderlich, weil die in diesem Punkt auftretenden Kräfte dann von dem starr angeordneten Bauelement in jedem Fall aufgenommen werden. Das unter Federkraft bewegliche Bauelement kann in diesem Bereich mit geringer Kraft anliegen. Im Bereich des anderen Umkehrpunktes jedoch, bei dem eine Rückhubrichtung, und damit eine Bewegungsumkehr eingeleitet wird, muß die Kraft des unter Kraft beweglich anliegenden Bauelementes so vergrößert werden, daß dieses in der Lage ist, die Bewegung in Arbeitsrichtung zu stoppen, umzukehren und die entsprechende Beschleunigung in Rückhubrichtung einzuleiten. Ist die Rückhubgeschwindigkeit erreicht, kann durch Verringerung des Kurvenquerschnittes und damit durch Verringerung des Abstandes der sich gegenüberliegenden und am Kurvenzug anliegenden Bauelemente die Anlagekraft wieder verringert werden bis auf eine Minimalkraft, die geeignet ist, den Rückhub durchzuführen. Diese Minimalkraft kann auch im Bereich des unteren Umkehrpunktes, der die Bewegung in Arbeitsrichtung einleitet, beibehalten werden. Die auftretenden Kräfte werden in diesem Punkt von dem an der Kurve anliegenden, starren Bauelement absolut sicher aufgenommen.

Weiter ist nach der Erfindung vorgeschlagen, daß mindestens am oberen Umkehrpunkt (O.T.) der Bereich des Umkehrpunktes bis 100° beträgt. In diesem Bereich wird die zur notwendigen Kraftsteigerung erforderliche Abstandsveränderung der genannten Bauelemente durch entsprechende Veränderung der Kurvenbreite bewirkt und wieder soweit wie möglich rückgängig gemacht. Eine vollständige Rückgängigmachung für den Rückhub ist nicht möglich, weil das Bauelement, daß die Rückhubbewegung überträgt, während des Rückhubes mit konstanter Geschwindigkeit eine größere Kraft übertragen muß als während des Arbeitshubes. Im unteren Umkehrpunkt, in dem das die Bewegung in Arbeitsrichtung übertragende Bauelement mit der für die Durchführung des Arbeitshubes erforderlichen Kraft an der Kurve anliegt, kann durch entsprechende Verminderung des zwischen den Bauelementen befindlichen Querschnitts der Kurve die Anlagekraft des anderen Bauelementes wieder bis auf ein Minimum zur Aufrechterhaltung der sicheren Anlage an der Kurve vermindert werden. Der genannte Bereich von 100° am oberen Umkehrpunkt sorgt dafür, daß sprunghafte Abstandsänderungen und damit sprunghafte Kraftänderungen und Stöße vermieden werden. Es ist vorteilhaft, wenn der größte Abstand zwischen den sich gegenüberliegenden und die jeweilige Bewegung übertragenden, an der Kurve anliegenden Bauelementen vor Erreichen des oberen Totpunktes erreicht ist, so daß bereits vor Erreichen des oberen Totpunktes die größte Anlagekraft erreicht ist. Nachdem nach Durchschreiten des oberen Umkehrpunktes die Rückhubbewegung eingeleitet und die erforderlichen Beschleunigungskräfte aufgebracht wurden, kann der genannte Abstand und damit die entsprechende Anlagekraft wieder kontinuierlich soweit vermindert werden, daß die verbleibende Anlagekraft ausreicht, die verbleibende Rückhubstrecke mit konstanter Geschwindigkeit zu durchfahren.

Es ist weiter nach der Erfindung noch vorgeschlagen, daß mindestens der obere Umkehrpunkt (O.T.) in der Mitte des Bereiches des Umkehrpunktes liegt. Dies vereinfacht die Fertigung, ist jedoch keineswegs zwingend. Im jeweils konkreten Ausführungsfall bestehende dynamische Verhältnisse können eine andere Lage als günstiger erscheinen lassen.

Ergänzend ist nach der Erfindung noch vorgeschlagen, daß in Bewegungsrichtung des zu bewegenden Bauteils zwei Mitnehmer hintereinander an diesem Bauteil angeordnet sind, zwischen denen sich die Kurvenflächen befinden. Die Lage der Mitnehmer hintereinander vereinfacht deren Konstruktion und Befestigung. Auch kann die Baugröße hierdurch verringert werden. Die genannte Anordnung sorgt gleichzeitig dafür, daß ein auf einem Kurventräger angeordneter erhabener Kurvenzug Anwendung findet, der an seinen Flanken einfach zu bearbeiten ist.

Ergänzend ist nach der Erfindung vorgesehen, daß die Mitnehmer einem Ziehschlitten einer Geradeausziehmaschine zugeordnet sind, dessen Arbeitsrichtung die Richtung des Ziehhubes ist. Dies ist der typische Anwendungsfall für die Erfindung.

Schließlich ist nach der Erfindung noch vorgesehen, daß das die Kraft für den Rückhub übertragende Bauelement unter der Vorlast einer mechanischen oder hydraulischen Feder steht. Dies sind konstruktiv einfach zu realisierende Möglichkeiten, um das genannte Bauelement mit jeweils unterschiedlichen und bedarfsgerechten Kräften zu beaufschlagen. Andere Möglichkeiten, wie z. B. einer drehwinkelabhängigen Drucksteuerung eines hydraulisch beaufschlagten Bauelementes sind zwar ebenfalls funktionsfähig aber aufwendiger.

Die Erfindung soll nun anhand der beigefügten Zeichnungen näher erläutert werden.

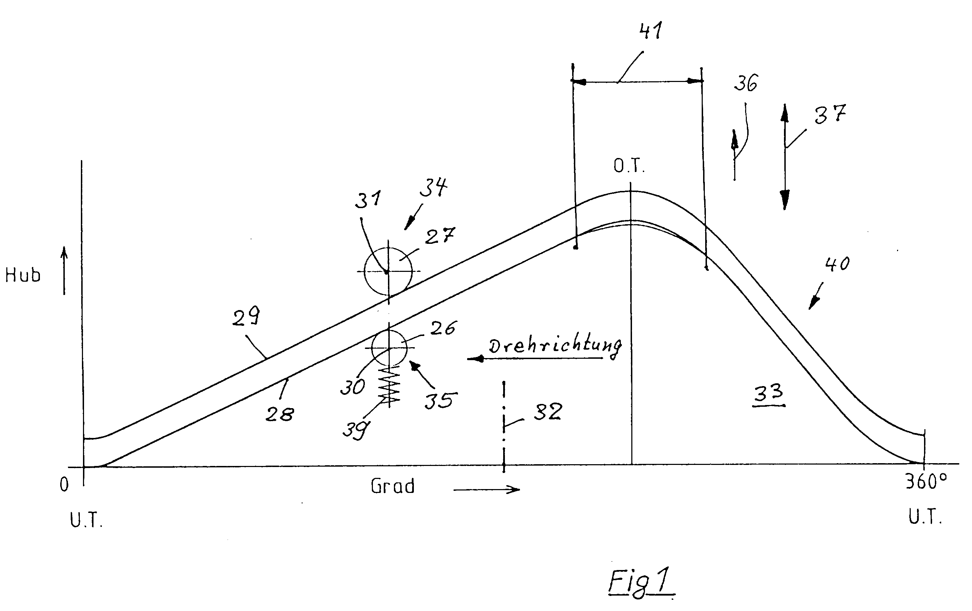

Es zeigen:
- Figur 1: Abwicklung einer Kurve auf dem ebenfalls abgewickelten Kurventräger
- Figur 2: Längsschnitt durch einen Mitnehmer
- Figur 3: Längsschnitt durch einen hydraulisch abgefederten Mitnehmer
Als Bewegungsantrieb beispielsweise für einen Ziehschlitten an einer Geradeausziehmaschine oder auch für die an solchen Maschinen typischerweise verwendeten beiden Ziehschlitten, die sich das Ziehgut gegenseitig übergeben, wird eine drehbar angeordnete Walze oder Trommel als Kurventräger verwendet, auf welcher, beispielsweise in erhabener Ausbildung, ein Kurvenzug angeordnet ist, wie er abgewickelt in Figur 1 dargestellt ist. Für jeden anzutreibenden Schlitten ist eine solche Kurve 40, angeordnet an einem Kurventräger 33, vorhanden. Eine solche Kurve weist, soweit sie erhaben ausgebildet ist, die Kurvenflächen 28 und gegenüberliegend 29 auf. Zum Zusammenwirken mit beispielsweise der Kurve 40 sind an jedem zu bewegenden Teil 21, also beispielsweise an jedem Ziehschlitten, zwei Mitnehmer 34 und 35 angeordnet. Diese Mitnehmer 34 und 35 sind in sich gegenüberliegender Anordnung hintereinander in Bewegungsrichtung 37 des zu bewegenden Teils 21 angeordnet. Figur 1 zeigt diese Mitnehmer 34 und 35 an der Kurve 40. Betrachtet man den in Figur 1 eingetragenen Drehrichtungspfeil und unterstellt, daß sich der Kurventräger 33 in Richtung dieses Pfeils dreht, so erfolgt relativ zur Kurve 40 eine Bewegung der Mitnehmer 34 und 35 von links nach rechts, also von 0° nach 360°, wodurch eine Bewegung des zu bewegenden Teils 21 in Bewegungsrichtung 37 erzwungen wird. Diese Art der Bewegungserzeugung ist jedoch bekannt, so daß hierauf nicht näher eingegangen werden muß.

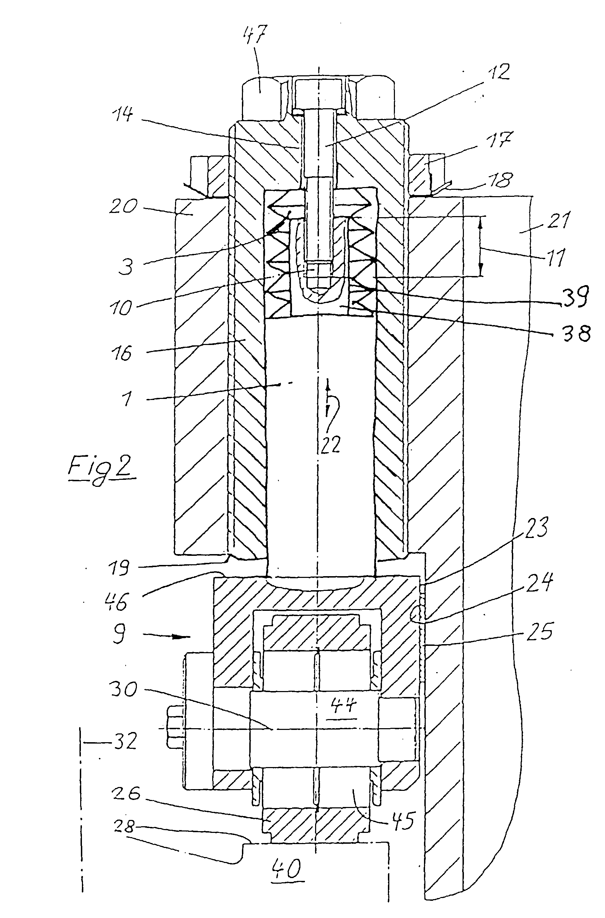

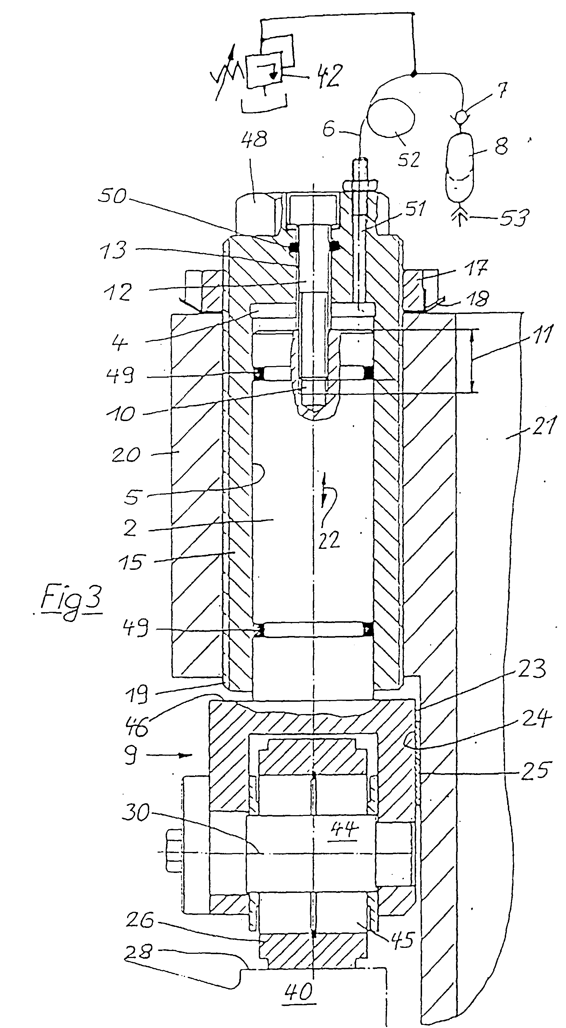

Damit die beschriebene Bewegung des zu bewegenden Teils 21, also beispielsweise eines Ziehschlittens einer Geradeausziehmaschine, beispielsweise von der Kurve 40 erzeugt werden kann, weisen die Mitnehmer 34 und 35 jeweils mindestens eine Rolle 26 und 27 auf, von denen im Ausführungsbeispiel die Rolle 27 die Rolle sein soll, mit der eine größere Kraft übertragen werden soll als mit der Rolle 26. Diese Situation tritt z. B. bei Ziehschlitten von Geradeausziehmaschinen für den Ziehhub auf. In diesem Fall überträgt die Rolle 26 die notwendige Kraft für den Schlittenrückhub. In einem solchen Fall ist die Rolle 27 vorzugsweise starr am zu bewegenden Teil 21 drehbar gelagert. Die Rolle 26 kann etwas schwächer und kleiner ausgeführt sein und ist in Bewegungsrichtung 37 verstellbar ausgeführt. Hierzu ist die Rolle 26 in einem gabelartigen Rollenkopf 9 auf einem Rollenbolzen 44 um die Drehachse 30 drehbar gelagert. Hierzu können geeignete Wälzlager 45 verwendet werden, die in den Figuren 2 und 3 nur angedeutet sind.

Die Drehachse 30 des Rollenkopfes 9 ist senkrecht zur Drehachse 32 des Kurventrägers 33 angeordnet. Der Rollenkopf 9 weist auf seiner dem zu bewegenden Teil 21 zugewandten Seite eine flache Fläche 23 auf, die an einer ebenfalls flachen Gegenfläche 24 anliegt. Die Gegenfläche 24 ist an einem Teil 25 ausgebildet, welches am zu bewegenden Teil 21 angeordnet ist. Die Gegenfläche 24 kann natürlich auch unmittelbar am zu bewegenden Teil 21 ausgebildet sein. Durch die mit der Gegenfläche 24 zusammenarbeitende flache Fläche 23 wird der Rollenkopf 9 gegen Verdrehung gesichert. Eine solche Verdrehsicherung kann natürlich auch in jeder anderen geeigneten Art konstruiert sein. So können als Führung auch z. B. zwei seitlich angeordnete Führungsstangen mit Führungsbuchsen vorgesehen sein. Eine Verschiebung des Rollenkopfes 9 in Verstellrichtung 22 und damit auch in Bewegungsrichtung 37 bleibt jedoch möglich. Hierzu ist der Rollenkopf 9 im Ausführungsbeispiel nach Figur 2 über einen Schaft 1, mit dem er fest verbunden ist, in einer entsprechenden Bohrung 3 eines Einstellstückes 16 eingesetzt. An seiner dem Rollenkopf 9 abgewandten Stirnseite weist der Schaft 1 zentrisch angeordnet ein sich über die Länge 11 erstreckendes Innengewinde auf, in welches eine Kopfschraube 12 eingesetzt ist, die durch eine entsprechende Bohrung 14 im Einstellstück 16 hindurchgeführt ist. Der Schaft 1 weist an seinem freien Ende einen zylindrischen Fortsatz 38 kleineren Durchmessers auf, welcher das Innengewinde 10 mit der Länge 11 aufnimmt, in welches die Kopfschraube 12 eingeschraubt ist. Durch den zylindrischen Fortsatz 38, der einen geringeren Durchmesser aufweist als der Schaft 1, entsteht in der Bohrung 3 ein Hohlraum, in welchem ein Tellerfederpaket 39 eingesetzt ist. Dieses Tellerfederpaket 39 ist so angeordnet, daß es einer Einfahrbewegung des Schaftes 1 eine mit zunehmendem Einfahrweg größere Kraft entgegensetzt. Durch die Anordnung der Tellerfedern kann die Federkennlinie des Tellerfederpaketes beeinflußt werden. Hierbei kann mittels der Kopfschraube 12 der Schaft 1 soweit in die Bohrung 3 hineingezogen werden, daß das Tellerfederpaket 39 eine gewünschte Vorspannung aufweist. Um später durch eine entsprechende weitere Einfahrbewegung die notwendige Federkraft für den Rückhub aufzubringen, kann durch eine entsprechende Verdickung der Kurve 40 der Schaft 1 maximal soweit eingefahren werden, bis die Rückseite 46 des Rollenkopfes 9 an der entsprechenden Stirnseite des Einstellstückes 16 zur Anlage kommt. Um Überbestimmungen zu vermeiden, muß jedoch eine solche Anlage vermieden werden. Bei der Entlastung durch entsprechende Verringerung der Dicke der Kurve 40 kann der Schaft 1 maximal soweit ausfahren, bis der Kopf der Kopfschraube 12 aufliegt. Die Grundeinstellung sollte so sein, daß auch diese Endlage nicht erreicht wird, weil sonst keine sichere Anlage des Umfangs der Rolle 26 an der Kurvenfläche 28 der Kurve 40 gewährleistet ist.

Das Einstellstück 16 weist auf seiner Außenseite ein Außengewinde 19 auf, mit welchem es in eine entsprechende Gewindemutter 20 eingesetzt ist. Im Ausführungsbeispiel ist die Gewindemutter 20 einstückig am zu bewegenden Teil 21 ausgebildet. Diese einstückige Ausbildung ist jedoch keineswegs zwingend. Das Einstellstück 16 kann im Innengewinde der Gewindemutter 20 gedreht und damit in Verstellrichtung 22 bewegt werden. Hierzu weist das Einstellstück 16 an seiner freien Stirnseite einen üblichen Außensechskant 47 auf. Es kann nun zur Einstellung der Kurve 40 durch entsprechende Verdrehung des Kurventrägers 33 so verfahren werden, daß die Rollen 26 und 27 im Bereich 41 im oberen Totpunkt stehen. Vorher wurde die Kopfschraube 12 soweit angezogen, daß das Tellerfederpaket 39 eine der Minimalkraft entsprechende Vorspannung aufweist. Im genannten oberen Todpunkt wird nun das Einstellstück 16 soweit eingeschraubt, daß die Umfangsfläche der Rolle 26 an der Kurvenfläche 28 zur Anlage kommt, so daß der Schaft 1 nun still stehen bleibt. Das Einstellstück 16 wird nun soweit weiter eingeschraubt, daß die für die Umkehrbewegung erforderliche Kraft am Tellerfederpaket 39 entsteht. Da die Kennlinie des Tellerfederpaketes bekannt ist, kann dies über eine Wegmessung des Einschraubweges festgestellt werden. In entsprechender Stellung wird sodann die Nutmutter 17 als Kontermutter angeschraubt und mittels des Sicherungsblechs 18 gesichert. In dieser Einstellung ist die Einrichtung betriebsbereit. Die auftretenden Kräfte werden über eine Querschnittsvariation oder Dickenvariation der Kurve 40 gesteuert.

Eine Variante des Aufbaus nach Figur 2 ist in Figur 3 dargestellt. Der Grundaufbau ist durchaus mit dem der Figur 2 vergleichbar. Eine Abfederung erfolgt jedoch über eine hydraulische Feder und nicht über eine mechanische Feder. Auch hier liegt wieder ein Rollenkopf 9 vor, der in seinem Aufbau und in der Gestaltung seiner Verdrehsicherung dem zu Figur 2 beschriebenen Rollenkopf 9 entspricht. Der Schacht 2 des Rollenkopfes 9 nach Figur 3 ist jedoch als Hydraulikkolben ausgebildet und hierzu in die als entsprechender Zylinder ausgebildete Bohrung 4 des Einstellstückes 15 eingesetzt, das im wesentlichen so aufgebaut ist wie das Einstellstück 16, das zur Figur 2 bereits beschrieben wurde. Der als Hydraulikkolben ausgebildete Schaft 2 ist hierbei über Dichtungen 49 gegen die Wand 5 abgedichtet.

Der Schaft 2 weist ebenfalls an seiner dem Rollenkopf 9 abgewandten Stirnseite ein sich über die Länge 11 erstreckendes Innengewinde 10 auf, in welches in der bereits zu Figur 2 beschriebenen Anordnung eine Kopfschraube 12 durch eine entsprechende Bohrung 13 im Einstellstück 15 eingesetzt ist. Allerdings ist der gewindelose Schaft der Kopfschraube 12 über die Dichtung 50 in der Bohrungswandung der Bohrung 13 abgedichtet. Mit der Kopfschaube 12, die mehr oder weniger weit eingeschraubt werden kann, wird die maximale Ausfahrlänge des Schaftes 2 bestimmt. Die maximale Einfahrlänge wird begrenzt durch die Rückseite 46 des Rollenkopfes 9, die dann an der entsprechenden stirnseitigen Gegenfläche des Einstellstückes 15 anliegt. Im ausgefahrenen Zustand besteht ein entsprechender Spalt in der Bohrung 4 zwischen dem stirnseitigen Ende der Bohrung 4 und dem stirnseitigen Ende des Schaftes 2. Der Schaft 2 hat somit eine Bewegungsmöglichkeit in Verstellrichtung 22.

Der vor der dem Rollenkopf 9 abgewandten Stirnseite des Schaftes 2 verbleibende freie Raum der Bohrung 4 ist mit Hydraulikflüssigkeit vollständig gefüllt. Hierzu weist die entsprechende Kopfseite des Einstellstückes 15 eine geeignete Anschlußbohrung 51 für eine Hydraulikleitung 6 auf. Die Hydraulikleitung weist ihrerseits ein Rückschlagventil 7 auf, welches vor einem von außen nachfüllbaren Druckspeicher 8 angeordnet ist und eine Rückbefüllung des Druckspeichers 8 aus dem freien Zylinderraum der Bohrung 4 heraus verhindert. Ein Befüllen dieses freien Zylinderraumes der Bohrung 4 aus dem Druckspeicher 8 heraus ist jedoch möglich, so daß das Hydraulikmedium in dem genannten freien Zylinderraum bei unbelastetem Schaft 2 stets unter einem von dem Druckspeicher 8 erzeugten Druck steht und damit den Schaft 2 soweit ausfährt, wie dies die Kopfschraube 12 zuläßt. Hierdurch wird der Schaft 2 mit einer Vorlast belastet, die vom Druck des Druckspeichers 8 abhängt. Diese Vorlast muß im Betrieb der Minimalkraft entsprechen. Für eine Einstellung wird in dieser Situation das Einstellstück 15 soweit eingeschraubt, bis die Umfangsfläche der Rolle 26 an der Kurvenfläche 28 der Kurve 40 sicher anliegt und die Kopfschraube 12 eine Tendenz zum Abheben zeigt. In dieser Lage kann die Kopfschraube 12 etwas herausgeschraubt werden, um noch einen geringfügigen Ausfahrspielraum zu schaffen und eine Überbestimmung zu vermeiden.

Bei der beschriebenen Anordnung, die hydraulisch noch sehr starr ist, genügen schon sehr kleine Dickenschwankungen der Kurve 40, um sehr starke Kraftveränderungen auszulösen. Um hier die gewünschte Elastizität zu schaffen, kann entweder die Leitung 6 in eine entsprechend große Anzahl von Windungen 52 verlegt werden, oder aber es kann mit der Leitung 6 ein kleiner und hier nicht näher dargestellter Druckspeicher mit steiler Kennlinie verbunden werden. Die Kennlinie kann hierbei so ausgewählt werden, daß bei einer gewünschten Größe einer Einfahrbewegung des Schaftes 2 eine entsprechende Kraftsteigerung durch den gestiegenen Hydraulikdruck in dem kleinen Druckspeicher hervorgerufen wird. Hieraus wiederum kann die Querschnittsveränderung oder Dickenveränderung der Kurve 40 an den entsprechenden Stellen des Kurvenverlaufes ermittelt werden, um eine gewünschte Anlagekraft zu erzeugen. Hierdurch kann gewährleistet werden, daß die Rollen 26 und 27 immer an den entsprechenden Flächen der Kurve 40 anliegen und daß an den entsprechenden Punkten immer die erforderlichen Kräfte aufgefangen werden können, daß aber gleichzeitig im übrigen Kurvenbereich eine Entlastung von den Andruckkräften erfolgt. Als weitere Sicherheit gegen Überlast kann die Leitung 6 noch verbunden sein mit einem Druckbegrenzungsventil 42, das bei einem voreingestellten Überdruck öffnet und so für Entlastung sorgt.

Aus Figur 1 ist zu ersehen, daß die Rollen 26 und 27 in Bewegungsrichtung 37 hintereinander angeordnet sind und hierbei zueinander parallel verlaufende und senkrecht zur Drehachse 32 des Kurventrägers 33 verlaufende Drehachsen 30 und 31 aufweisen. Zwischen den nicht näher bezeichneten Umfangsflächen der Rollen 26 und 27 verläuft die Kurve 40, die auch in einem Stand der Technik gemäß der EP-A-0 371 165 schon so bemessen ist, daß sie während des gesamten Kurvenverlaufes ständig mit ihren Kurvenflächen 28 und 29 an den Umfangsflächen des Rollen 26 und 27 anliegt und diese niemals verläßt. Auch bei diesem Stand der Technik, wie er in der Beschreibungseinleitung der europäischen Veröffentlichung 0 371 165 erwähnt ist, traten natürlich beim Antrieb von Ziehschlitten an Geradeausziehmaschinen während des Ziehvorganges einerseits und infolge der hohen Schlittenbeschleunigungen für einen raschen Rückhub des Schlittens andererseits große Kräfte auf. Diese Kräfte müssen von den Mitnehmern, die auch im bekannten Stand der Technik in der Regel bereits entsprechende Mitnehmerrollen, die an den Kurvenflächen anliegen, aufweisen, übertragen werden. Kurvenbreite und Kurvenabstand müssen dabei so sein, daß die Rollen immer an den zugeordneten Kurvenflächen anliegen, weil anderenfalls in den jeweiligen Kurvenumkehrpunkten unerlaubt große Stöße auftreten, die dadurch entstehen, daß infolge eines evtl. vorhandenen Spieles das anzutreibende Teil, also z. B. der Ziehschlitten, nicht mehr mitgenommen wird, bis die entsprechende Kurvenfläche erneut zur Anlage an die zugeordnete Rolle kommt. Durch diese Anlage aber entsteht ein Stoß, weil sich die Rolle nicht mit der entsprechenden Geschwindigkeit in die entsprechende Bewegungsrichtung des Schlittens bewegt. Um einen solchen Stoß zu verhindern, könnte man die Rollen in ihrer Lage einstellbar gestalten, so daß sie so eingestellt werden können, daß sie beide an den zugeordneten Kurvenflächen anliegen. In dieser Anlage könnte dann die Rolleneinstellung fixiert werden. Dies aber würde, wie bekannt, dazu zwingen, die zugeordneten Breitenabmessungen der Kurve an jedem Punkt der Kurve mit nahezu unendlicher Genauigkeit erzeugen zu müssen, weil beispielsweise bei nur geringem Übermaß der Breite an irgendeiner Stelle des Kurvenzuges die Rollenlagerung zerstört würde. Um dies zu vermeiden hat man in dem vorstehend genannten Stand der Technik eine Rolle starr angeordnet und die andere Rolle über einen abgefederten Schwenkarm gegen die zugeordnete Kurvenfläche gelegt. Maßungenauigkeiten des Kurvenzuges können nun von der gefederten Rolle aufgefangen werden. Hierbei ist die Rolle, die den Ziehhub des Ziehschlittens bewirkt, wegen der auftretenden notwendigen Ziehkräfte starr am Ziehschlitten gelagert, während die Schlittenrückhubrolle in der beschriebenen Weise gefedert gelagert ist. Da der Rückhub jedoch mit sehr großer Beschleunigung eingeleitet wird, muß auch die Rückhubrolle große Kräfte übertragen. Die der Rückhubrolle zugeordnete Feder muß also entsprechend stark sein. Dies hatte die unerwünschte Folge, daß die Rollen immer mit entsprechend großen Kräften gegen die zugeordneten Kurvenflächen gepreßt wurden, wodurch ein erhöhter Verschleiß sowohl an der Rolle und den zugeordneten Rollenlagern als auch an den Kurvenflächen entstand. Wird aber die Feder zu weich eingestellt, kommt es in den Umkehrpunkten doch noch zu unzulässigen Schlägen und Stößen, weil die zu weich eingestellte Feder den auftretenden Beschleunigungskräften nicht standhält und nachgibt. Dies führt dann zu raschen Zerstörungen an der Maschine. Solche Zerstörungen sind in der Praxis gefürchtet, weswegen in der Praxis auch die genannte Feder vorzugsweise zu hart eingestellt wird. Es kommt auch vor, daß diese Feder durch die Einstellung vollständig zu einem Block zusammengepreßt wird, so daß keinerlei Federmöglichkeit mehr existiert. In diesem Fall tritt ebenfalls eine rasche Zerstörung der Einrichtung aufgrund der unvermeidbaren Maßtoleranzen des Kurvenzuges ein. Diese bekannten und in der genannten europäischen Veröffentlichung bereits beschriebenen Probleme hat der Fachmann zu lösen versucht mit den Maßnahmen, die in der genannten europäischen Veröffentlichung beschrieben sind. Hierdurch aber entstehen die eingangs aufgeführten Probleme, die es zu beseitigen galt.

In Figur 1 ist zu erkennen, daß bei einer Durchführung des Ziehhubes 36 die Rolle 27 arbeitet und daher an der Kurvenfläche 29 anliegen muß. Während des Ziehhubes 36 muß die Rolle 26 ansich keine Kräfte übertragen. Während des Rückhubes jedoch, der in zum Ziehub 36 entgegengesetzter Richtung erfolgt, wird die erforderliche Kraftübertragung mit Hilfe der Rolle 26 durchgeführt. Diese Rolle 26 ist jedoch gegen eine Federvorlast beweglich, wobei diese Vorlast sehr klein gehalten werden kann und lediglich dazu dient, die Rolle in Anlage mit der entsprechenden Kurvenfläche 28 zu halten, in den Bereichen, in denen diese Rolle 36 keine Kraft übertragen muß. Für die Abbremsung und Beschleunigung in umgekehrter Richtung und auch danach für den stationären Rückhub des zu bewegenden Schlittens ist jedoch eine größere Kraft erforderlich. Die Rolle 26 würde daher während der Umkehr der Schlittenbewegung in Richtung des Rückhubes und während des konstanten Rückhubes einfedern, um die notwendige Federkraft für die genannten Bewegungen aufzubauen, so daß die Rolle 27 von der Kurvenfläche 29 unerwünschterweise abheben würde. Um dies zu verhindern, ist die Kurve 40 im Bereich 41 gegenüber den übrigen Kurvenbereichen verdickt, so daß die Rolle 26 aufgrund des sich vergrößernden Kurvenquerschnittes einfedert und damit die erforderliche Federkraft für eine nachfolgende Bewegung aufbaut, ohne daß hierbei die gegenüberliegende Rolle abheben könnte. Noch während des Hubes in Ziehrichtung und als Ende der konstanten Hubgeschwindigkeit des Ziehschlittens wird damit im Bereich 41 der Kurvenquerschnitt allmählich bis zu einem Maximum, das in der Regel kurz vor dem oberen Umkehrpunkt liegt, vergrößert, so daß sich eine Federkraft aufbauen kann, die die Bremskraft und die nachfolgende Beschleunigungskraft für die Einleitung des Rückhubes aufbringen kann. Der Kurvenquerschnitt kann sich spätestens dann, wenn die konstante Rückhubgeschwindigkeit erreicht ist, wieder derart verkleinern, daß der Abstand zwischen den Rollen 26 und 27 sich durch Ausfederung der Rolle 27 wieder verkleinert, wodurch die Rolle 26 wieder mit geringerer Kraft an der Kurvenfläche 28 anliegt. Falls erwünscht, kann im Bereich des unteren Umkehrpunktes und für die Dauer des Ziehhubes durch entsprechende Veränderung des Kurvenquerschnittes der Rollenabstand zwischen den Rollen 26 und 27 weiter vermindert werden, um die Federkraft, mit der die Rolle 26 an der Kurvenfläche 28 anliegt, weiter zu vermindern.

In der Bauweise nach Figur 2 wird die Federkennlinie des Tellerfederpaketes im wesentlichen bestimmt von den Abmessungen der Tellerfedern und von der Art der Schichtung der Tellerfedern. Bei der Bauvariante nach Figur 3 hängt die Federkennlinie ab von der Elastizität der Rohrleitung 6 und ggfls. der daraus hergestellten Windungen 52 bzw. von einem nicht dargestellten anschließbaren Druckspeicher und dessen Kennlinie.

In Abhängigkeit vom Neigungswinkel und Verlauf der Federkennlinie muß im Verlauf einer Umdrehung die Querschnittsänderung der Kurve 40 bemessen sein, um aufgrund einer entsprechenden Abstandsveränderung der Rollen 26 und 27 eine entsprechende Federkraft zu erzeugen.

Die grundsätzliche Funktionsweise eines solchen Kurvenantriebs ist aus der genannten europäischen Veröffentlichung 0 371 165 gut bekannt, so daß hier genauere Erläuterungen nicht erforderlich sind.

Mit der erfindungsgemäßen Lehre gelingt es, die von einer mechanischen bzw. hydraulischen Feder erzeugten Kräfte im Verlaufe einer Umdrehung so zu variieren, daß eine größtmögliche Entlastung aller Bauteile erreicht wird. Die Variation der Kräfte wird durch entsprechende Variation des Querschnitts bzw. der Breite der zugeordneten Kurve erreicht, die eine entsprechende Abstandsänderung der an die Kurve anliegenden Bauelemente und damit ein Wechsel der Kräfte entsprechend der zugeordneten Federkennlinie bewirkt. Die der Kurve zugeordneten Rollen können hierdurch ständig in Anlage an diese Kurve gehalten werden und es muß dennoch nicht diese Kurve in ihrer Form und in ihren Abmessungen hochpräzise gestaltet werden. Auch ein Hinterschnitt ist nicht erforderlich. Auf komplizierte Steuerungen zur Variation der genannten Kräfte kann verzichtet werden.

### Liste der verwendeten Bezugszeichen

- 1: Schaft
- 2: Schaft
- 3: Bohrung
- 4: Bohrung
- 5: Bohrung
- 6: Rohrleitung
- 7: Rückschlagventil
- 8: Druckspeicher
- 9: Rollenkopf
- 10: Innengewinde
- 11: Länge
- 12: Kopfschraube
- 13: Bohrung
- 14: Bohrung
- 15: Einstellstück
- 16: Einstellstück
- 17: Nutmutter
- 18: Sicherungsblech
- 19: Außengewinde
- 20: Gewindemutter
- 21: zu bewegendes Teil
- 22: Verstellrichtung
- 23: flache Fläche
- 24: Gegenfläche
- 25: Teil
- 26: Rolle
- 27: Rolle
- 28: Kurvenfläche
- 29: Kurvenfläche
- 30: Drehachse
- 31: Drehachse
- 32: Drehachse (Kurventräger)
- 33: Kurventräger
- 34: Mitnehmer
- 35: Mitnehmer
- 36: Ziehhub
- 37: Bewegungsrichtung
- 38: zylindrischer Fortsatz
- 39: Tellerfederpaket
- 40: Kurve
- 41: Bereich
- 42: Druckbegrenzungsventil
- 43: unbenutzt
- 44: Rollenbolzen
- 45: Wälzlager
- 46: Rückseite
- 47: Außensechskant
- 48: Außensechskant
- 49: Dichtung
- 50: Dichtung
- 51: Anschlußbohrung
- 52: Windung
- 53: Füllanschluß

## Patentansprüche

1. Bewegungsantrieb mit mindestens einer an einem umlaufend antreibbaren Kurventräger (33) angeordneten, geschlossenen Kurve (40) zur mechanischen Mitnahme von mittels der Kurve (40) hin und her zu bewegenden Bauteilen (21), wobei diese mittels an Kurvenflächen (28,29) anliegenden Mitnehmern (34,35), die vorzugsweise Rollen (26,27) oder Walzen als Bauelemente, die mit der Kurve (40) zusammenwirken, aufweisen, mitgenommen werden, wobei mindestens eines der Bauelemente an der Kurvenfläche (28,29) unter Kraft beweglich anliegt, wobei das in Arbeitsrichtung wirksame Bauelement (27) starr und das gegenüberliegende Bauelement (26) beweglich an den Kurvenfläche (28 bzw. 29) während des gesamten Umlaufs des Kurventrägers anliegt, derart, daß bei Vergrößerung des Abstandes zwischen den Bauelementen (26,27) die Kraft vergrößert und bei Verkleinerung des genannten Abstandes die Kraft vermindert wird, und wobei weiter mindestens im Bereich (41) des Umkehrpunktes (O.T.), bei dem die Rückhubrichtung beginnt, auf den Umkehrpunkt zu, der Kurvenquerschnitt sich so verändert, daß ein vorhergehender und von dem Kurvenquerschnitt ausgefüllter Minimalabstand zwischen den Bauelementen vergrößert und von dem Umkehrpunkt weg wieder bis auf einen Minimalabstand verkleinert wird, derart, daß die sich durch die erzwungene Abstandsveränderung verändernden Kräfte im Bereich (41) des genannten Umkehrpunktes in ihrer Größe mindestens den durch die auftretenden Beschleunigungen bzw. Verzögerungen des zu bewegenden Teiles auftretenden Massenkräfte und während des gleichmäßigen Rückhubes durch Verringerung des genannten Querschnitts einer auftretenden Rückhubkraft entsprechen,
dadurch gekennzeichnet, daß im Bereich (41) des Umkehrpunktes (O.T.) der Kurvenquerschnitt sich so verändert, daß der größte Abstand zwischen den Bauelementen (26,27) erreicht wird, bevor deren Berührungspunkte mit der Kurvenfläche (28,29) den Umkehrpunkt (O.T.) erreichen.

2. Einrichtung nach Anspruch 1, dadurch gekennzeichnet, daß mindestens an dem oberen Umkehrpunkt (O.T.) der Bereich (41) des Umkehrpunktes bis 100° beträgt.

3. Einrichtung nach Anspruch 2, dadurch gekennzeichnet, daß mindestens der obere Umkehrpunkt (O.T.) in der Mitte des Bereiches (41) des Umkehrpunktes liegt.

4. Einrichtung nach einem der Ansprüche 1 bis 3, dadurch gekennzeichnet, daß in Bewegungsrichtung des zu bewegenden Bauteils (21) zwei Mitnehmer (34,35) hintereinander an diesem Bauteil (21) angeordnet sind, zwischen denen sich die Kurvenflächen (28,29) befinden.

5. Einrichtung nach einem der Ansprüche 1 bis 4, dadurch gekennzeichnet, daß die Mitnehmer (34,35) einem Ziehschlitten einer Geradeausziehmaschine zugeordnet sind, dessen Arbeitsrichtung die Richtung des Ziehhubes (36) ist.

6. Einrichtung nach einem der Ansprüche 1 bis 5, dadurch gekennzeichnet, daß das die Kraft für den Rückhub übertragende Bauelement (26) unter der Vorlast einer mechanischen oder hydraulischen Feder steht.

## Claims

1. Motion drive with at least one closed cam (40), located on a cam support (33) able to be driven in a rotating manner, for the mechanical entrainment of components (21) to be moved to and fro by means of the cam (40), these components (21) being entrained by means of entrainment members (34, 35), bearing on cam surfaces (28, 29), which preferably comprises rollers (26, 27) or cylinders as components, which cooperate with the cam (40), in which case at least one of the components bears movably under force against the cam surface (28, 29), in which case the component (27) acting in the working direction bears rigidly and the opposite component (26) bears movably against the cam surface (28 or 29) during the entire rotation of the cam support so that when the distance between the components (26, 27) is increased, the force is increased and when the said distance is reduced, the force is reduced and in which case furthermore at least in the region (41) of the reversing point (O.T.), at which the return stroke direction begins, towards the reversing point, the cam cross-section varies so that a preceding minimal distance between the components, filled by the cam cross-section, is increased and is reduced away from the reversing point once again to a minimal distance so that the forces varying due to the forced variation of distance in the region (41) of the said reversing point correspond in their size at least to the mass forces occurring due to the existing accelerations or decelerations of the part to be moved and during the uniform return stroke due to the reduction of the said cross-section of an occurring return stroke force, characterised in that in the region (41) of the reversing point (O.T.), the cam cross-section varies so that the greatest distance between the components (26, 27) is achieved, before their contact points with the cam surface (28, 29) reach the reversing point (O.T.).

2. Device according to Claim 1, characterised in that at least at the upper reversing point (O.T.) the region (41) of the reversing point amounts to up to 100°.

3. Device according to Claim 2, characterised in that at least the upper reversing point (O.T.) lies in the centre of the region (41) of the reversing point.

4. Device according to one of Claims 1 to 3, characterised in that in the direction of movement of the component (21) to be moved, two entrainment members (34, 35) are arranged one behind the other on this component (21), between which the cam surfaces (28, 29) are located.

5. Device according to one of Claims 1 to 4, characterised in that the entrainment members (34, 35) are associated with a pulling carriage of a rectilinear pulling machine, whereof the working direction is the direction of the pulling stroke (36).

6. Device according to one of Claims 1 to 5, characterised in that the component (26) transmitting the force for the return stroke is under the initial load of a mechanical or hydraulic spring.

## Revendications

1. Ensemble d'entraînement avec au moins une came (40) fermée, disposée sur un support de came (33) pouvant être entraîné en rotation et destinée à l'entraînement mécanique d'éléments de construction (21) devant effectuer un mouvement de va-et-vient au moyen de la came (40), sur lequel ces éléments de construction (21) sont entraînés au moyen d'éléments d'entraînement (34,35) portant sur des surfaces (28,29) de la came et présentant de préférence des galets (26,27) ou des cylindres comme éléments de construction coopérant avec la came (40), un des éléments de construction au moins portant de façon mobile sur la surface (28,29) de la came sous l'effet d'une force, sur lequel l'élément de construction (27) agissant dans le sens de travail porte fixement et l'élément de construction (26) lui faisant face porte mobilement sur les surfaces de came (28 ou 29) pendant l'intégralité de la révolution effectuée par le support de came de manière à ce que la force s'accroisse lorsque la distance entre les éléments de construction (26,27) s'agrandit et qu'elle faiblisse lorsque cette distance se réduit, et également selon lequel, au moins dans la zone (41) du point de renvoi (O.T.) où la course de retour commence et en direction du point de renvoi, la section de la came se modifie de manière à ce qu'un écart minimum entre les éléments de construction antérieur et rempli par la section de came s'agrandisse puis rediminue à partir du point de renvoi pour revenir à des dimensions minimales de façon à ce les contraintes changeant sous l'effet de la modification forcée de l'écart correspondent, par leur force et dans la zone (41) du point de renvoi mentionné, au moins aux forces proportionelles à la masse générées par les accélérations et ralentissements de l'élément à déplacer ainsi qu'à une force de course de retour générée pendant la course de retour uniforme et sous l'effet de la réduction de la section mentionnée, caractérisé en ce que la section de came se modifie dans la zone (41) du point de renvoi (O.T) de manière à ce que l'écart le plus grand entre les éléments de construction (26,27) soit atteint avant que leurs points de contact avec la surface de came (28,29) n'atteignent le point de renvoi (O.T).

2. Dispositif selon la revendication 1 caractérisé en ce qu'au moins à la hauteur du point de renvoi supérieur (O.T), la zone (41) du point de renvoi (O.T) est inférieure ou égale à 100°.

3. Dispositif selon la revendication 2 caractérisé en ce qu'au moins le point de renvoi supérieur (O.T) se trouve au centre de la zone (41) du point de renvoi.

4. Dispositif selon l'une des revendications 1 à 3 caractérisé en ce qu'en dans le sens du mouvement de l'élément de construction (21) à déplacer, deux éléments d'entraînement (34,35), entre lesquels se trouvent les surfaces de came (28,29), sont disposés l'un derrière l'autre sur cet élément (21).

5. Dispositif selon l'une des revendications 1 à 4 caractérisé en ce que les éléments d'entraînement (34,35) sont adjoints à un chariot de tréfilage d'une tréfileuse droite dont le sens de travail est la direction de la course de tréfilage (36).

6. Dispositif selon l'une des revendications 1 à 5 caractérisé en ce que l'élément de construction (26) transmettant la force pour la course de retour subit la précharge d'un ressort mécanique ou hydraulique.
